# EUROPEAN PATENT APPLICATION

(11) **EP 4 417 056 A1**
(43) Date of publication of application: **21.08.2024**
(21) Application number: 22880865.5
(22) Date of filing: 04.10.2022
(51) Int. Cl.: A01P 7/04, A01P 3/00, A01N 43/50

(54) **PEST CONTROL COMPOSITION**

(30) Priority: 13.10.2021 JP 2021168263
(71) Applicant: Daikin Industries, Ltd., Osaka 530-0001 (JP)
(72) Inventor: IKEUCHI, Hideyuki, Osaka-shi, Osaka 530-0001 (JP); YAMAUCHI, Akiyoshi, Osaka-shi, Osaka 530-0001 (JP); KISHIKAWA, Yosuke, Osaka-shi, Osaka 530-0001 (JP)
(74) Representative: Hoffmann Eitle
(86) International application number: PCT/JP2022/037123
(87) International publication number: WO 2023/063169

(57) **Abstract**

An object is to provide a composition useful for pest control. Disclosed is a pest control composition containing a compound represented by formula (1) or a salt thereof: 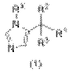 wherein R¹ represents an aryl group optionally having one or more substituents, R² represents a hydrogen atom, a halogen atom, a cyano group, a hydrocarbon group optionally having one or more substituents, R⁴O-, R⁵S-, or R⁶R⁷N-, R³ represents a hydrogen atom or a hydrocarbon group optionally having one or more substituents, R^{X} represents a hydrogen atom, a hydrocarbon group optionally having one or more substituents, R⁸CO-, or R⁹SO₂-, R⁴, R⁵, R⁶, R⁷, R⁸, and R⁹ each independently represent a hydrogen atom or a hydrocarbon group optionally having one or more substituents, and R³ may be bound to R¹ or R² to form a ring.

## Description

### Technical Field

The present disclosure relates primarily to a pest control composition.

Dexmedetomidine hydrochloride is the active D-form of medetomidine, which has an imidazole skeleton. This compound is a central α₂-adrenoreceptor agonist with high affinity and selectivity, and is known to exhibit sedative effects. Precedex (trademark) Intravenous Solution 200 pg, which contains dexmedetomidine hydrochloride as an active ingredient, was developed and approved for manufacture and marketing for the efficacy of sedation during and after withdrawal from mechanical ventilation in intensive care (NPL 1).

### Citation List

### Non-patent Literature

NPL 1: Precedex (trademark) Intravenous Solution 200 pg, Pharmaceutical Interview Form

### Summary of Invention

### Technical Problem

An object of the present disclosure is to provide a composition useful for pest control.

### Solution to Problem

This disclosure includes the following aspects.

### Item 1.

A pest control composition comprising a compound represented by the following formula (1) or a salt thereof: 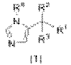 wherein
R¹ represents an aryl group optionally having one or more substituents,
R² represents a hydrogen atom, a halogen atom, a cyano group, a hydrocarbon group optionally having one or more substituents, R⁴O-, R⁵S-, or R⁶R⁷N-,
R³ represents a hydrogen atom or a hydrocarbon group optionally having one or more substituents,
R^{X} represents a hydrogen atom, a hydrocarbon group optionally having one or more substituents, R⁸CO-, or R⁹SO₂-,
R⁴, R⁵, R⁶, R⁷, R⁸, and R⁹ each independently represent a hydrogen atom or a hydrocarbon group optionally having one or more substituents, and
R³ may be bound to R¹ or R² to form a ring.

### Item 2.

The pest control composition according to Item 1, wherein R¹ is a phenyl group optionally having one or more substituents.

### Item 3.

The pest control composition according to Item 1 or 2, wherein R¹ is a phenyl group having at least one substituent selected from the group consisting of halogen atoms and alkyl groups.

### Item 4.

The pest control composition according to any one of Items 1 to 3,
wherein
R² is a hydrogen atom, a halogen atom, a cyano group, an alkyl group optionally having one or more substituents, an alkenyl group optionally having one or more substituents, an alkynyl group optionally having one or more substituents, an aryl group optionally having one or more substituents, R⁴O-, R⁵S-, or R⁶R⁷N-, and
R⁴, R⁵, R⁶, and R⁷ are each independently a hydrogen atom or an alkyl group optionally having one or more substituents.

### Item 5.

The pest control composition according to any one of Items 1 to 4, wherein R² is an alkyl group optionally having one or more substituents.

### Item 6.

The pest control composition according to any one of Items 1 to 5, wherein R³ is a hydrogen atom, an alkyl group optionally having one or more substituents, or an aryl group optionally having one or more substituents.

### Item 7.

The pest control composition according to any one of Items 1 to 6, wherein R³ is a hydrogen atom.

### Item 8.

The pest control composition according to any one of Items 1 to 7,
wherein
R^{X} is a hydrogen atom, an alkyl group optionally having one or more substituents, an aryl group optionally having one or more substituents, an aralkyl group optionally having one or more substituents, R⁸CO-, or R⁹SO₂-, and
R⁸ and R⁹ are each independently a hydrogen atom or an alkyl group optionally having one or more substituents.

### Item 9.

The pest control composition according to any one of Items 1 to 8, wherein R^{X} is a hydrogen atom.

### Item 10.

The pest control composition according to any one of Items 1 to 9, wherein the pest is a pathogenic insect or pathogenic microorganism for a plant.

### Item 11.

The pest control composition according to Item 10, wherein the plant is at least one member selected from the group consisting of gramineous plants, cruciferous plants, solanaceous plants, and cucurbitaceous plants.

### Item 12.

The pest control composition according to any one of Items 1 to 11, wherein the pest is at least one member selected from the group consisting of hemipterans, thrips, blast disease pathogens, sheath blight pathogens, phytophthora pathogens, and brown blotch disease pathogens.

### Item 13.

The pest control composition according to any one of Items 1 to 12, for being applied to a plant directly or to soil in which a plant is grown.

### Advantageous Effects of Invention

The present disclosure provides a composition useful, for example, for pest control.

### Description of Embodiments

The summary of the present disclosure is not intended to describe every disclosed embodiment or all implementations of the disclosure. The following description of the present disclosure gives more specific examples of actual embodiments.

In several parts in the present disclosure, guidance is provided through examples, and these examples are usable in various combinations. In each case, the example group can function as a non-exclusive and representative group.

All publications, patents, and patent applications cited in the present specification are incorporated by reference in their entirety into the specification.

### 1. Terminology

The symbols and abbreviations in the present specification, unless otherwise limited, are to be understood in the context of the present specification and in the meanings commonly used in the art to which the disclosure pertains.

In the present specification, the phrase "comprising" is used with the intent to include the phrase "consisting essentially of" and the phrase "consisting of."

Unless otherwise limited, the steps, treatments, or operations described in the present specification can be performed at room temperature. In the specification, room temperature can mean a temperature within the range of 10 to 40°C.

In the present specification, the expression "Cₙ₋ₘ" (wherein n and m respectively represent a positive integer, and n<m) denotes that the number of carbons is n or more and m or less, as ordinarily understood by those skilled in the art.

In the present specification, the phrase "hydrocarbon group" means a group consisting solely of carbon and hydrogen. Examples of hydrocarbon groups include (1) an aliphatic hydrocarbon group that is optionally substituted with one or more aromatic hydrocarbon groups (aryl groups), and (2) an aromatic hydrocarbon group that is optionally substituted with one or more aliphatic hydrocarbon groups.

The hydrocarbon group may have a structure that is linear, branched, cyclic, or a combination of these.

In the present specification, the aliphatic hydrocarbon group may be saturated or unsaturated. Examples of aliphatic hydrocarbon groups include an alkyl group, an alkenyl group, an alkynyl group, a cycloalkyl group, and a cycloalkenyl group.

In the present specification, examples of alkyl groups include linear or branched C₁₋₁₂ alkyl groups, and specific examples include a methyl group, an ethyl, a propyl group (e.g., an n-propyl group, and an isopropyl group), a butyl group (e.g., an n-butyl group, an isobutyl group, a sec-butyl group, and a tert-butyl group), a pentyl group (e.g., an n-pentyl group, a tert-pentyl group, a neo-pentyl group, an isopentyl group, a sec-pentyl group, and a 3-pentyl group), a hexyl group, a heptyl group, an octyl group, a nonyl group, and a decyl group.

In the present specification, examples of alkenyl groups include linear or branched C₂₋₁₀ alkenyl groups, and specific examples include a vinyl group, a 1-propenyl group, an isopropenyl group, a 2-methyl-1-propenyl group, a 1-butenyl group, a 2-butenyl group, a 3-butenyl group, a 2-ethyl-1-butenyl group, a 1-pentenyl group, a 2-pentenyl group, a 3-pentenyl group, a 4-pentenyl group, a 4-methyl-3-pentenyl group, a 1-hexenyl group, a 2-hexenyl group, a 3-hexenyl group, a 4-hexenyl group, and a 5-hexenyl group.

In the present specification, examples of alkynyl groups include linear or branched C₂₋₁₀ alkynyl groups, and specific examples include an ethynyl group, a 1-propynyl group, a 2-propynyl group, a 1-butynyl group, a 2-butynyl group, a 3-butynyl group, a 1-pentynyl group, a 2-pentynyl group, a 3-pentynyl group, a 4-pentynyl group, a 1-hexynyl group, a 2-hexynyl group, a 3-hexynyl group, a 4-hexynyl group, and a 5-hexynyl group.

In the present specification, examples of cycloalkyl groups include C₃₋₁₀ cycloalkyl groups, and specific examples include a cyclopropyl group, a cyclobutyl group, a cyclopentyl group, a cyclohexyl group, a cycloheptyl group, a cyclooctyl group, and an adamantyl group.

In the present specification, examples of cycloalkenyl groups include C₃₋₁₀ cycloalkenyl groups, and specific examples include a cyclopropenyl group, a cyclobutenyl group, a cyclopentenyl group, a cyclohexenyl group, and a cycloheptenyl group.

In the present specification, the aromatic hydrocarbon group (aryl group) may be, for example, monocyclic, bicyclic, tricyclic, or tetracyclic. Examples of aromatic hydrocarbon groups include C₆₋₁₄ aromatic hydrocarbon groups, and specific examples include a phenyl group, a 1-naphthyl group, a 2-naphthyl group, a 2-biphenyl group, a 3-biphenyl group, a 4-biphenyl group, and a 2-anthryl group.

In the present specification, examples of the aliphatic hydrocarbon group that is substituted with one or more aromatic hydrocarbon groups include an aryl alkyl group (aralkyl group), and specific examples include C₇₋₁₅ aralkyl groups such as a benzyl group, a phenethyl group, a diphenylmethyl group, a trityl group, a 1-naphthylmethyl group, a 2-naphthylmethyl group, a 2,2-diphenylethyl group, a 3-phenylpropyl group, a 4-phenylbutyl group, a 5-phenylpentyl group, a 2-biphenylmethyl group, a 3-biphenylmethyl group, and a 4-biphenylmethyl group.

In the present specification, examples of substituents that can substitute a hydrocarbon group include a halogen, a hydroxyl group, a mercapto group, an amino group, an alkoxy group, an alkylthio group, a monoalkylamino group, and a dialkylamino group.

In the present specification, examples of halogens include fluorine, chlorine, bromine, and iodine.

In the present specification, the alkoxy group may be a group represented by RO- (wherein R is an alkyl group). Examples of alkoxy groups include linear or branched C₁₋₁₂ alkoxy groups, and specific examples include a methoxy group, an ethoxy group, a propoxy group (e.g., an n-propoxy group and an isopropoxy group), a butoxy group, a pentyloxy group, and a hexyloxy group.

In the present specification, the alkylthio group is a group represented by RS- (wherein R is an alkyl group). Examples of alkylthio groups include linear or branched C₁₋₁₂ alkylthio groups, and specific examples include a methylthio group, an ethylthio group, a propylthio group (e.g., an n-propylthio group and an isopropylthio group), a butylthio group, a pentylthio group, and a hexylthio group.

In the present specification, the monoalkylamino group may be a group represented by R-NH- (wherein R is an alkyl group). Examples of monoalkylamino groups include linear or branched C₁₋₁₂ monoalkylamino groups, and specific examples include a monomethylamino group, a monoethylamino group, a monopropylamino group (e.g., a mono-n-propylamino group, and a monoisopropylamino group), and a monobutylamino group.

In the present specification, the dialkylamino group may be a group represented by R₂N- (wherein two R's are each independently an alkyl group). Examples of dialkylamino groups include linear or branched C₁₋₁₂ dialkylamino groups, and specific examples include a dimethylamino group, a diethylamino group, an ethylmethylamino group, a dipropylamino group (e.g., di-n-propylamino group, and diisopropylamino group), and a methylpropylamino group (e.g., a methyl-n-propylamino group, and a methylisopropylamino group).

In the present specification, the aromatic heterocyclic group (heteroaryl group) may be, for example, monocyclic, bicyclic, tricyclic, or tetracyclic, and may be a 5- to 18-, 5-to 16-, 5- to 14-, or 5- to 12-membered aromatic heterocyclic group. Examples of aromatic heterocyclic groups include a 5- or 6-membered monocyclic aromatic heterocyclic group and a 5- to 18-membered aromatic fused heterocyclic group.

In the present specification, examples of 5- or 6-membered monocyclic aromatic heterocyclic groups include a pyrrolyl group (e.g., a 1-pyrrolyl group, a 2-pyrrolyl group, and a 3-pyrrolyl group), a furyl group (e.g., a 2-furyl group, and a 3-furyl group), a thienyl group (e.g., a 2-thienyl group, and a 3-thienyl group), a pyrazolyl group (e.g., a 1-pyrazolyl group, a 3-pyrazolyl group, and a 4-pyrazolyl group), an imidazolyl group (e.g., a 1-imidazolyl group, a 2-imidazolyl group, and a 4-imidazolyl group), an isoxazolyl group (e.g., a 3-isoxazolyl group, a 4-isoxazolyl group, and a 5-isoxazolyl group), an oxazolyl group (e.g., a 2-oxazolyl group, a 4-oxazolyl group, and a 5-oxazolyl group), an isothiazolyl group (e.g., a 3-isothiazolyl group, a 4-isothiazolyl group, and a 5-isothiazolyl group), a thiazolyl group (e.g., a 2-thiazolyl group, a 4-thiazolyl group, and a 5-thiazolyl group), a triazolyl group (e.g., a 1,2,3-triazol-4-yl group, and a 1,2,4-triazol-3-yl group), an oxadiazolyl group (e.g., a 1,2,4-oxadiazol-3-yl group, and a 1,2,4-oxadiazol-5-yl group), a thiadiazolyl group (e.g., a 1,2,4-thiadiazol-3-yl group, and a 1,2,4-thiadiazol-5-yl group), a tetrazolyl group, a pyridyl group (e.g., a 2-pyridyl group, a 3-pyridyl group, and a 4-pyridyl group), a pyridazinyl group (e.g., a 3-pyridazinyl group, and a 4-pyridazinyl group), a pyrimidinyl group (e.g., a 2-pyrimidinyl group, a 4-pyrimidinyl group, and a 5-pyrimidinyl group), and a pyrazinyl group.

In the present specification, examples of 5- to 18-membered aromatic fused heterocyclic groups include an isoindolyl group (e.g., a 1-isoindolyl group, a 2-isoindolyl group, a 3-isoindolyl group, a 4-isoindolyl group, a 5-isoindolyl group, a 6-isoindolyl group, and a 7-isoindolyl group), an indolyl group (e.g., a 1-indolyl group, a 2-indolyl group, a 3-indolyl group, a 4-indolyl group, a 5-indolyl group, a 6-indolyl group, and a 7-indolyl group), a benzo[b]furanyl group (e.g., a 2-benzo[b]furanyl group, a 3-benzo[b]furanyl group, a 4-benzo[b]furanyl group, a 5-benzo[b]furanyl group, a 6-benzo[b]furanyl group, and a 7-benzo[b]furanyl group), a benzo[c]furanyl group (e.g., a 1-benzo[c]furanyl group, a 4-benzo[c]furanyl group, and a 5-benzo[c]furanyl group), a benzo[b]thienyl group, (e.g., a 2-benzo[b]thienyl group, a 3-benzo[b]thienyl group, a 4-benzo[b]thienyl group, a 5-benzo[b]thienyl group, a 6-benzo[b]thienyl group, and a 7-benzo[b]thienyl group), a benzo[c]thienyl group (e.g., a 1-benzo[c]thienyl group, a 4-benzo[c]thienyl group, and a 5-benzo[c]thienyl group), an indazolyl group (e.g., a 1-indazolyl group, a 2-indazolyl group, a 3-indazolyl group, a 4-indazolyl group, a 5-indazolyl group, a 6-indazolyl group, and a 7-indazolyl group), a benzimidazolyl group (e.g., a 1-benzimidazolyl group, a 2-benzimidazolyl group, a 4-benzimidazolyl group, and a 5-benzimidazolyl group), a 1,2 - benzisoxazolyl group (e.g., a 1,2-benzisoxazol-3-yl group, a 1,2-benzisoxazol-4-yl group, a 1,2-benzisoxazol-5-yl group, a 1,2-benzisoxazol-6-yl group, and a 1,2-benzisoxazol-7-yl group), a benzoxazolyl group (e.g., a 2-benzoxazolyl group, a 4-benzoxazolyl group, a 5-benzoxazolyl group, a 6-benzoxazolyl group, and a 7-benzoxazolyl group), a 1,2-benzisothiazolyl group (e.g., a 1,2-benzisothiazol-3-yl group, a 1,2-benzisothiazol-4-yl group, a 1,2-benzisothiazol-5-yl group, a 1,2-benzisothiazol-6-yl group, and a 1,2-benzisothiazol-7-yl group), a benzothiazolyl group (e.g., a 2-benzothiazolyl group, a 4-benzothiazolyl group, a 5-benzothiazolyl group, a 6-benzothiazolyl group, and a 7-benzothiazolyl group), an isoquinolyl group (e.g., a 1-isoquinolyl group, a 3-isoquinolyl group, a 4-isoquinolyl group, and a 5-isoquinolyl group), a quinolyl group (e.g., a 2-quinolyl group, a 3-quinolyl group, a 4-quinolyl group, a 5-quinolyl group, and a 8-quinolyl group), a cinnolinyl group (e.g., a 3-cinnolinyl group, a 4-cinnolinyl group, a 5-cinnolinyl group, a 6-cinnolinyl group, a 7-cinnolinyl group, and a 8-cinnolinyl group), a phthalazinyl group (e.g., a 1-phthalazinyl group, 4-phthalazinyl group, 5-phthalazinyl group, a 6-phthalazinyl group, a 7-phthalazinyl group, and 8-phthalazinyl group), a quinazolinyl group (e.g., a 2-quinazolinyl group, a 4-quinazolinyl group, a 5-quinazolinyl group, a 6-quinazolinyl group, a 7-quinazolinyl group, and a 8-quinazolinyl group), a quinoxalinyl group (e.g., a 2-quinoxalinyl group, a 3-quinoxalinyl group, a 5-quinoxalinyl group, a 6-quinoxalinyl group, a 7-quinoxalinyl group, and a 8-quinoxalinyl group), a pyrazolo[1,5-a]pyridyl group (e.g., a pyrazolo[1,5-a]pyridin-2-yl group, a pyrazolo[1,5-a]pyridin-3-yl group, a pyrazolo[1,5-a]pyridin-4-yl group, a pyrazolo[1,5-a]pyridin-5-yl group, a pyrazolo[1,5-a]pyridin-6-yl group, and a pyrazolo[1,5-a]pyridin-7-yl group), and an imidazo[1,2-a]pyridyl group (e.g., an imidazo[1,2-a]pyridin-2-yl group, an imidazo[1,2-a]pyridin-3-yl group, an imidazo[1,2-a]pyridin-5-yl group, an imidazo[1,2-a]pyridin-6-yl group, an imidazo[1,2-a]pyridin-7-yl group, and an imidazo[1,2-a]pyridin-8-yl group).

### 2. Pest Control Composition

The pest control composition of the present disclosure contains a compound represented by the following formula (1) or a salt thereof: 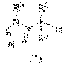 wherein
R¹ is an aryl group optionally having one or more substituents,
R² represents a hydrogen atom, a halogen atom, a cyano group, a hydrocarbon group optionally having one or more substituents, R⁴O-, R⁵S-, or R⁶R⁷N-,
R³ represents a hydrogen atom or a hydrocarbon group optionally having one or more substituents,
R^{X} represents a hydrogen atom, a hydrocarbon group optionally having one or more substituents, R⁸CO-, or R⁹SO₂-,
R⁴, R⁵, R⁶, R⁷, R⁸, and R⁹ each independently represent a hydrogen atom or a hydrocarbon group optionally having one or more substituents, and
R³ may be bound to R¹ or R² to form a ring.

In an embodiment, R¹ is preferably a phenyl group optionally having one or more substituents or a naphthyl group optionally having one or more substituents, and more preferably a phenyl group optionally having one or more substituents. The one or more substituents are preferably at least one member selected from the group consisting of halogens and alkyl groups. R¹ is particularly preferably a phenyl group having at least one substituent selected from the group consisting of halogens and alkyl groups. If the substituent is an alkyl group, the alkyl group is preferably a C₁₋₁₂ alkyl group, more preferably a C₁₋₆ alkyl group, and still more preferably a C₁₋₃ alkyl group. If one or more substituents are present, the number of substituents is, for example, 1 to 4, preferably 1 to 3, more preferably 1 or 2, and particularly preferably 2.

In an embodiment, R¹ is preferably a group represented by the following formula (2): 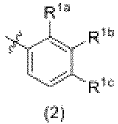 wherein R^{1a}, R^{1b}, and R^{1c} are independently a hydrogen atom, a halogen atom, or an alkyl group with the proviso that not all of R^{1a}, R^{1b}, and R^{1c} are a hydrogen atom. In other words, at least one of R^{1a}, R^{1b}, and R^{1c} is a halogen atom or an alkyl group.

Combinations of R^{1a}, R^{1b}, and R^{1c} include the following examples.
- A combination in which R^{1a} is an alkyl group, R^{1b} is an alkyl group, and R^{1c} is a hydrogen;
- A combination in which R^{1a} is an alkyl group, R^{1b} is a halogen, and R^{1c} is a hydrogen
- A combination in which R^{1a} is an alkyl group, R^{1b} is a hydrogen, and R^{1c} is an alkyl group;
- A combination in which R^{1a} is an alkyl group, R^{1b} is a hydrogen, and R^{1c} is a halogen
- A combination in which R^{1a} is a halogen, R^{1b} is a halogen, and R^{1c} is a hydrogen
- A combination in which R^{1a} is a halogen, R^{1b} is an alkyl group, and R^{1c} is a hydrogen
- A combination in which R^{1a} is a halogen, R^{1b} is a hydrogen, and R^{1c} is a halogen
- A combination in which R^{1a} is a halogen, R^{1b} is a hydrogen, and R^{1c} is an alkyl group
- A combination in which R^{1a} is a hydrogen, R^{1b} is an alkyl group, and R^{1c} is an alkyl group;
- A combination in which R^{1a} is a hydrogen, R^{1b} is an alkyl group, and R^{1c} is a halogen
- A combination in which R^{1a} is a hydrogen, R^{1b} is a halogen, and R^{1c} is a halogen
- A combination in which R^{1a} is a hydrogen, R^{1b} is a halogen, and R^{1c} is an alkyl group
If R^{1a}, R^{1b}, or R^{1c} is an alkyl group, a C₁₋₁₂ alkyl group is preferred, a C₁₋₆ alkyl group is more preferred, and a C₁₋₃ alkyl group is still more preferred.

In an embodiment, R² is preferably a hydrogen, a halogen, a cyano group, an alkyl group optionally having one or more substituents, an alkenyl group optionally having one or more substituents, an alkynyl group optionally having one or more substituents, an aryl group optionally having one or more substituents, R⁴O-, R⁵S-, or R⁶R⁷N-; more preferably an alkyl group optionally having one or more substituents, an alkenyl group optionally having one or more substituents, an alkynyl group optionally having one or more substituents, or an aryl group optionally having one or more substituents; still more preferably an alkyl group optionally having one or more substituents, an alkenyl group optionally having one or more substituents, or an alkynyl group optionally having one or more substituents; and still more preferably an alkyl group optionally having one or more substituents (e.g., an alkyl group such as a methyl group, and a perfluoroalkyl group such as a trifluoromethyl group). If one or more substituents are present, the number of substituents is selected from the range of one to the maximum possible number of substituents, such as one, two, or three.

In an embodiment, R⁴, R⁵, R⁶, and R⁷ are each independently preferably a hydrogen, an alkyl group optionally having one or more substituents, an aryl group optionally having one or more substituents, or an aralkyl group optionally having one or more substituents; more preferably a hydrogen, an alkyl group optionally having one or more substituents, or an aryl group optionally having one or more substituents; still more preferably a hydrogen or an alkyl group optionally having one or more substituents; and yet more preferably a hydrogen or an alkyl group.

In an embodiment, R³ is preferably a hydrogen, an alkyl group optionally having one or more substituents, an alkenyl group optionally having one or more substituents, an alkynyl group optionally having one or more substituents, or an aryl group optionally having one or more substituents; more preferably a hydrogen, an alkyl group optionally having one or more substituents, an alkenyl group optionally having one or more substituents, or an alkynyl group optionally having one or more substituents; still more preferably a hydrogen or an alkyl group optionally having one or more substituents (e.g., an alkyl group such as a methyl group and a perfluoroalkyl group such as a trifluoromethyl group); and yet more preferably a hydrogen. In another embodiment, R³ is preferably a hydrogen, an alkyl group optionally having one or more substituents, or an aryl group optionally having one or more substituents. If one or more substituents are present, the number of substituents is selected from the range of one to the maximum possible number of substituents, such as one, two, or three.

In an embodiment, R³ is preferably bonded to R¹ or R² to form a ring. Examples of such rings include cyclopropane, cyclobutane, cyclopentane, cyclohexane, cycloheptane, cyclooctane, cyclononane, cyclodecane, oxacyclopropane, oxacyclobutane, oxacyclopentane, oxacyclohexane, oxacycloheptane, oxacyclooctane, oxacyclononane, oxacyclodecane, thiacyclopropane, thiacyclobutane, thiacyclopentane, thiacyclohexane, thiacycloheptane, thiacyclooctane, thiacyclononane, thiacyclodecane, azacyclopropane, azacyclobutane, azacyclopentane, azacyclohexane, azacycloheptane, azacyclooctane, azacyclononane, azacyclodecane, and azacyclopropane.

In an embodiment, it is preferred that R¹ be a phenyl group optionally having one or more substituents, R² be an alkyl group optionally having one or more substituents, and R³ be a hydrogen. In the embodiment, it is further preferred that R¹ be a group represented by formula (2).

In an embodiment, R^{X} is preferably a hydrogen, an alkyl group optionally having one or more substituents (e.g., an alkyl group such as a methyl group and an alkoxy alkyl group such as a methoxymethyl group), an aryl group optionally having one or more substituents (e.g., an aryl group such as a phenyl group), an aralkyl group optionally having one or more substituents (e.g., an aralkyl group such as a trityl group), R⁸CO-, or R⁹SO₂-, and more preferably a hydrogen. If one or more substituents are present, the number of substituents is selected from the range of one to the maximum possible number of substituents, such as one, two, or three.

In an embodiment, R⁸ and R⁹ are each independently preferably a hydrogen, an alkyl group optionally having one or more substituents, an aryl group optionally having one or more substituents, or an aralkyl group optionally having one or more substituents; more preferably a hydrogen, an alkyl group optionally having one or more substituents, or an aryl group optionally having one or more substituents; still more preferably a hydrogen or an alkyl group optionally having one or more substituents; and yet more preferably a hydrogen or an alkyl group.

In an embodiment, the compound represented by formula (1) or a salt thereof is preferably a compound or a salt thereof selected from the group consisting of formulas (1-1) to (1-84) below.

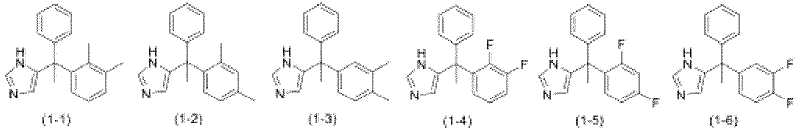

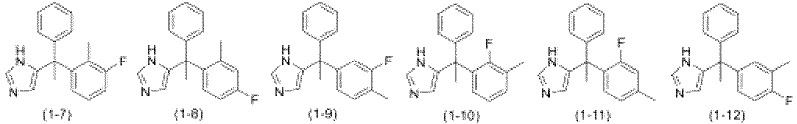

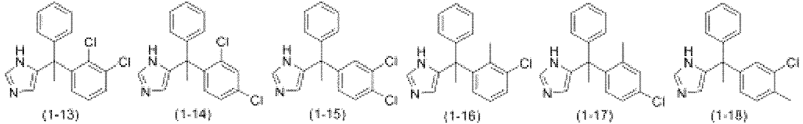

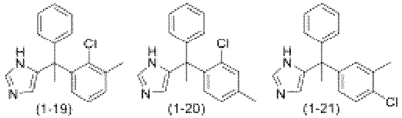

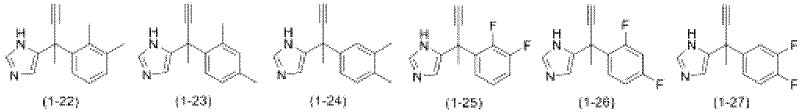

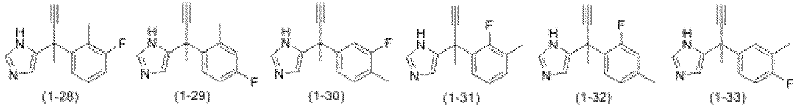

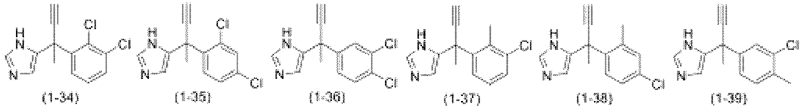

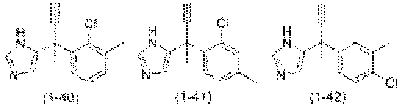

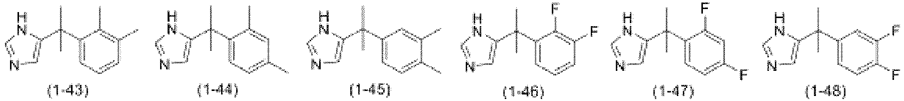

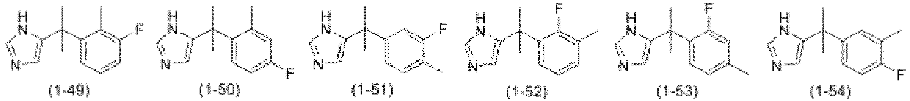

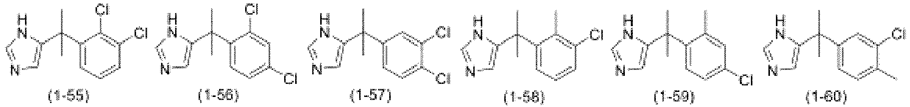

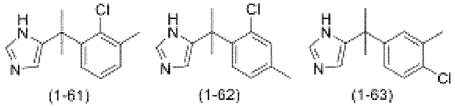

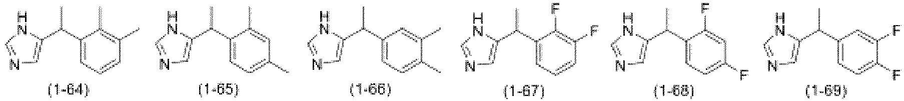

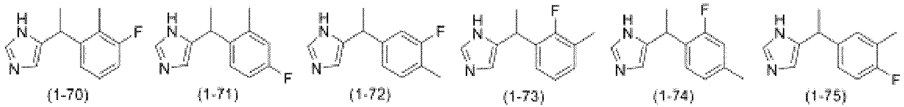

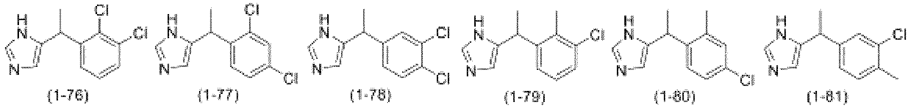

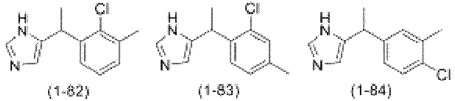

In an embodiment, it is also preferred that the compound represented by formula (1) or a salt thereof is a compound of formulas (1-1) to (1-84) or a salt thereof in which the hydrogen of NH of the imidazole ring is replaced with R^{X}.

The salt of the compound represented by formula (1) may be an acid addition salt or a base addition salt.

The acid addition salt may be an inorganic or organic salt. Examples of inorganic acid salts include salts with hydrochloric acid, sulfuric acid, phosphoric acid, hydrobromic acid, hydroiodic acid, nitric acid, pyrosulfuric acid, or metaphosphoric acid. Examples of organic acid salts include salts with citric acid, benzoic acid, acetic acid, propionic acid, fumaric acid, maleic acid, or sulfonic acid (e.g., methanesulfonic acid, p-toluenesulfonic acid, and naphthalenesulfonic acid).

Examples of base addition salts include alkali metal salts such as sodium salts and potassium salts.

The compound represented by formula (1) or a salt thereof can be synthesized according to ordinary methods.

The content of the compound represented by formula (1) or a salt thereof in the pest control composition is preferably an effective amount for pest control. The lower limit of the content may be, for example, 0.01 parts by mass, 0.05 parts by mass, 0.1 parts by mass, 0.5 parts by mass, 1 part by mass, 5 parts by mass, or 10 parts by mass, per 100 parts by mass of the pest control composition. The upper limit of the content may be, for example, 99 parts by mass, 90 parts by mass, 85 parts by mass, 80 parts by mass, 75 parts by mass, 70 parts by mass, 65 parts by mass, 60 parts by mass, 55 parts by mass, or 50 parts by mass, per 100 parts by mass of the pest control composition. The content may be, for example, 0.01 to 99 parts by mass, 0.05 to 90 parts by mass, or 0.1 to 80 parts by mass, per 100 parts by mass of the pest control composition.

The pest control composition preferably contains a compound represented by formula (1) or a salt thereof and a carrier. The carrier may be a solid carrier, a liquid carrier, or a gaseous carrier.

Examples of solid carriers include inorganic particles, such as of activated carbon, silica, talc, titanium dioxide, zeolite, calcium carbonate, and calcium phosphate; clay minerals, such as kaolin, diatomaceous earth, bentonite, clay, and acid clay; polymer particles, such as polyethylene, polypropylene, and polyvinylidene chloride; fertilizers; and wood flour.

Examples of liquid carriers include water (e.g., tap water, ion-exchanged water, distilled water, and sterile water), alcohols (e.g., methanol, ethanol, isopropanol, butanol, ethylene glycol, and propylene glycol), ethers (e.g., diethyl ether, methyl cellosolve, ethyl cellosolve, dimethyl cellosolve, diethylene glycol monomethyl ether, diethylene glycol monoethyl ether, tetrahydrofuran, and dioxane), esters (e.g., ethyl acetate and diethyl phthalate), ketones (e.g., acetone, methyl ethyl ketone, methyl isobutyl ketone, and cyclohexanone), aliphatic hydrocarbons (e.g. kerosene and mineral oil), aromatic hydrocarbons (e.g., xylene, toluene, and alkyl naphthalene), halogenated hydrocarbons (e.g., dichloromethane, dichloroethane, and chloroform), nitriles (e.g., acetonitrile and isobutyronitrile), sulfoxides (e.g., dimethylsulfoxide), amides (e.g., N,N-dimethylformamide and N,N-dimethylacetamide), and vegetable oils.

Examples of gaseous carriers include butane gas; chlorofluorocarbon gas; alternative chlorofluorocarbon gases, such as HFO and HFC; liquefied petroleum gas (LPG); and carbon dioxide gas.

These carriers may be used alone or in a combination of two or more. In an embodiment, the carrier is a solid carrier or a liquid carrier.

The lower limit of the ratio (mass ratio) of the content of the carrier to the content of the compound represented by formula (1) or a salt thereof may be, for example, 0.1, 0.5, or 1. The upper limit of the ratio may be, for example, 1000, 900, 800, 700, 600, 500, 400, 300, 200, 100, 50, or 10. The ratio may be, for example, 0.1 to 1000, 0.5 to 500, or 1 to 100.

The pest control composition may further contain any additional component (or an auxiliary agent). An example of such additional components is a surfactant. The surfactant may be a nonionic surfactant, an anionic surfactant, a cationic surfactant, or an amphoteric surfactant.

Examples of nonionic surfactants include fatty acid dialkanolamides (e.g., lauric acid diethanolamide), polyoxyalkylene fatty acid amides (e.g., polyoxyethylene stearic acid amide), polyoxyalkylene aryl ethers (e.g., polyoxyethylene phenyl ether), polyoxyalkylene alkyl aryl ethers (e.g., polyoxyethylene octyl phenyl ether), polyoxyalkylene alkyl or alkenyl ether (e.g., polyoxyethylene lauryl ether, and polyoxyethylene stearyl ether), fatty acid esters of polyhydric alcohols (e.g., polyethylene glycol mono- or di-stearate, polyethylene glycol mono- or di-laurate, and polyoxyethylene hydrogenated castor oil), glycerol fatty acid esters (e.g., glycerol monostearate, and glycerol monooleate), sorbitan fatty acid esters (e.g., sorbitan monolaurate, and sorbitan monostearate), and polyoxyethylene-polyoxypropylene block polymers.

Examples of anionic surfactants includes alkane sulfonic acids (e.g., dodecanesulfonic acid), arenesulfonic acids (e.g., dodecylbenzenesulfonic acid), polyalkylene glycol sulfonic acid (e.g., polyethylene glycol sulfonic acid), alkyl sulfate (e.g., lauryl sulfate), polyoxyalkylene alkyl ether sulfate (e.g., polyoxyethylene lauryl ether sulfate), polyoxyalkylene alkyl aryl ether sulfate (e.g., polyoxyethylene alkyl phenyl ether sulfate), alkyl phosphoric acids (e.g. lauryl phosphate), polyoxyalkylene alkyl ether phosphate (e.g., polyoxyethylene lauryl ether phosphate), polyoxyalkylene aryl ether phosphate (e.g., polyoxyethylene phenyl ether phosphate), salts thereof (alkali metal salts, such as sodium salts), and long-chain fatty acid salts (e.g., calcium stearate, magnesium stearate, aluminum monostearate, triethanolamine stearate, and triethanolamine oleate).

Examples of cationic surfactants include tetraalkylammonium salts (e.g., lauryl trimethyl ammonium chloride, and dilauryl dimethyl ammonium chloride), trialkylammonium salts (e.g., lauryl dimethyl benzyl ammonium chloride and benzalkonium chloride), and tri(polyoxyalkylene alkyl) ammonium salts (e.g., tri(polyoxyethylene stearyl) ammonium chloride).

Examples of amphoteric surfactants include betaines (e.g., betaine and alkyl betaines such as dimethyl dodecyl carboxybetaine), phosphatidic acid derivatives (e.g., lecithin, lysolecithin, and phosphatidylethanolamine), and dimethyl alkylamine oxide.

These surfactants may be used alone or in a combination of two or more. The lower limit of the ratio (mass ratio) of the content of the surfactant to the content of the compound represented by formula (1) or a salt thereof may be, for example, 0.1, 0.5, or 1. The upper limit of the ratio may be, for example, 1000, 900, 800, 700, 600, 500, 400, 300, 200, 100, 50, or 10. The ratio may be, for example, 0.1 to 1000, 0.5 to 500, or 1 to 100.

Other examples of additional components include antifreezes, antifoams, antiseptics, antioxidants, thickeners, colorants, plasticizers, lubricants, dispersants, buffers, and trace elements.

The pest control composition may be, for example, a powder formulation (e.g., a powder formulation containing 0.1 to 10 mass% of a compound represented by formula (1) or a salt thereof and 90 to 99.9 mass% of a solid carrier), a granule formulation (e.g., a granule formulation containing 0.1 to 30 mass% of a compound represented by formula (1) or a salt thereof and 70 to 99.5 mass% of a solid carrier), a wettable powder formulation (e.g., a wettable powder formulation containing 0.5 to 90 mass% of a compound represented by formula (1) or a salt thereof, 5 to 95 mass% of a solid carrier, and 0.5 to 20 mass% of a surfactant), a suspension concentrate (e.g., a suspension concentrate containing 5 to 75 mass% of a compound represented by formula (1) or a salt thereof, 24 to 94 mass% of a liquid carrier, and 1 to 40 mass% of a surfactant), or an emulsifiable concentrate (e.g., an emulsifiable concentrate containing 1 to 95 mass% of a compound represented by formula (1) or a salt thereof, 1 to 80 mass% of a liquid carrier, and 1 to 30 mass% of a surfactant).

The pests controllable by the pest control composition can be, for example, a pathogenic insect or a pathogenic microorganism, and preferably a pathogenic insect or pathogenic microorganism for a plant.

Examples of pathogenic insects include, but are not limited to, insects, nematodes, ticks, and *Ixodes.* The pathogenic insect is preferably those that belong to the systematics or classification shown in the table below.

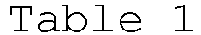

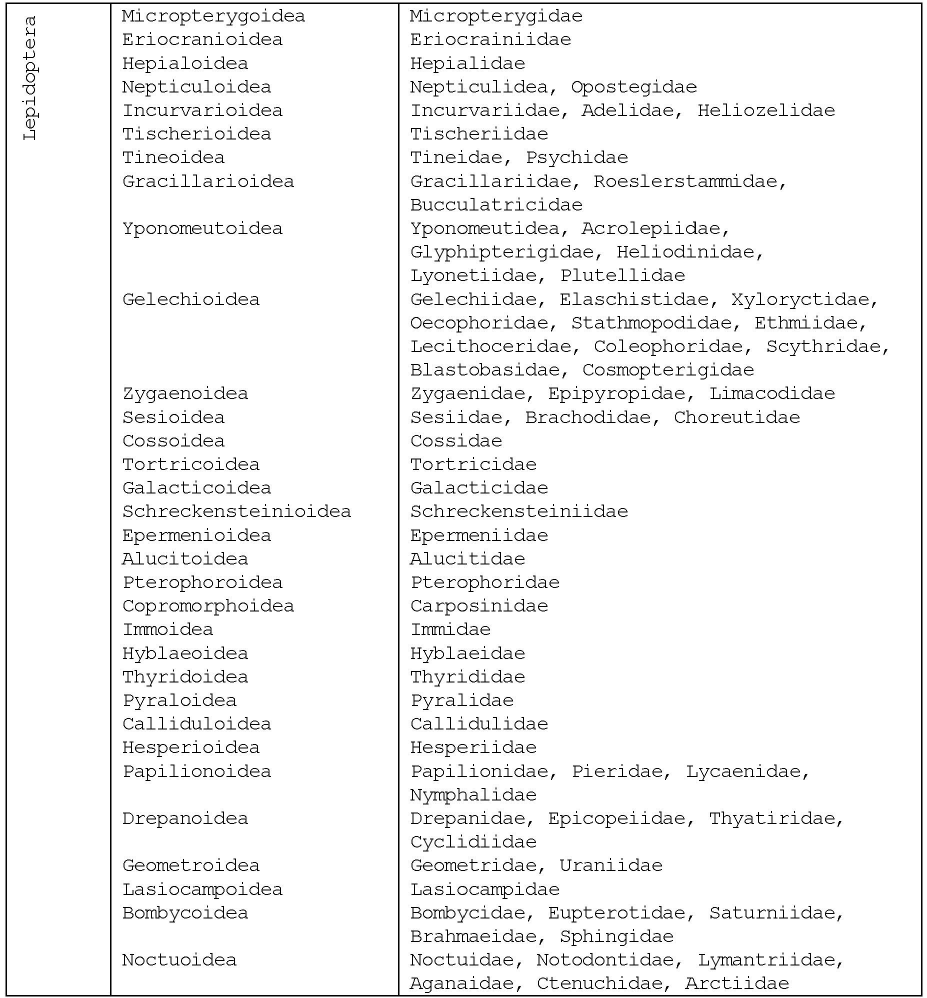

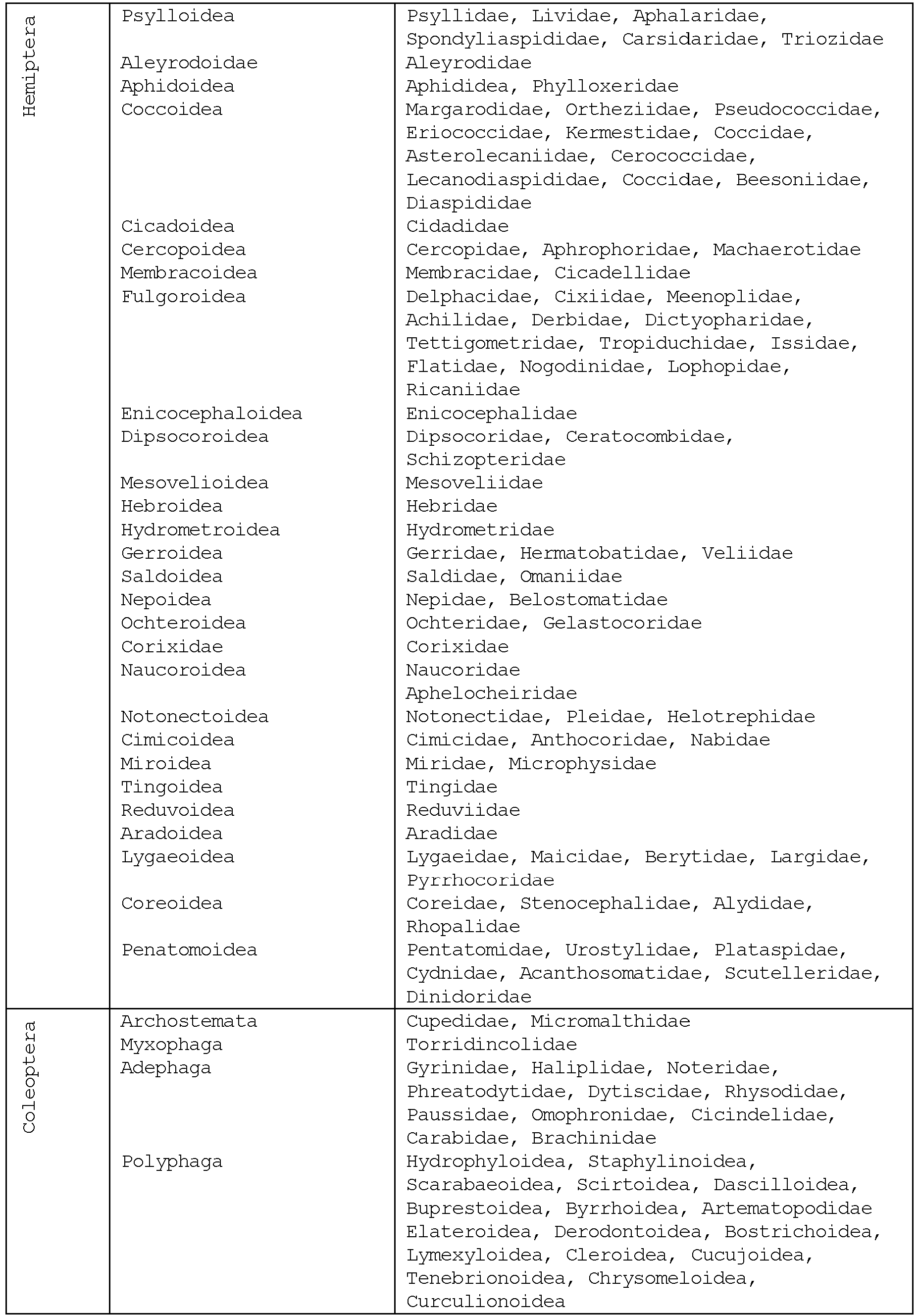

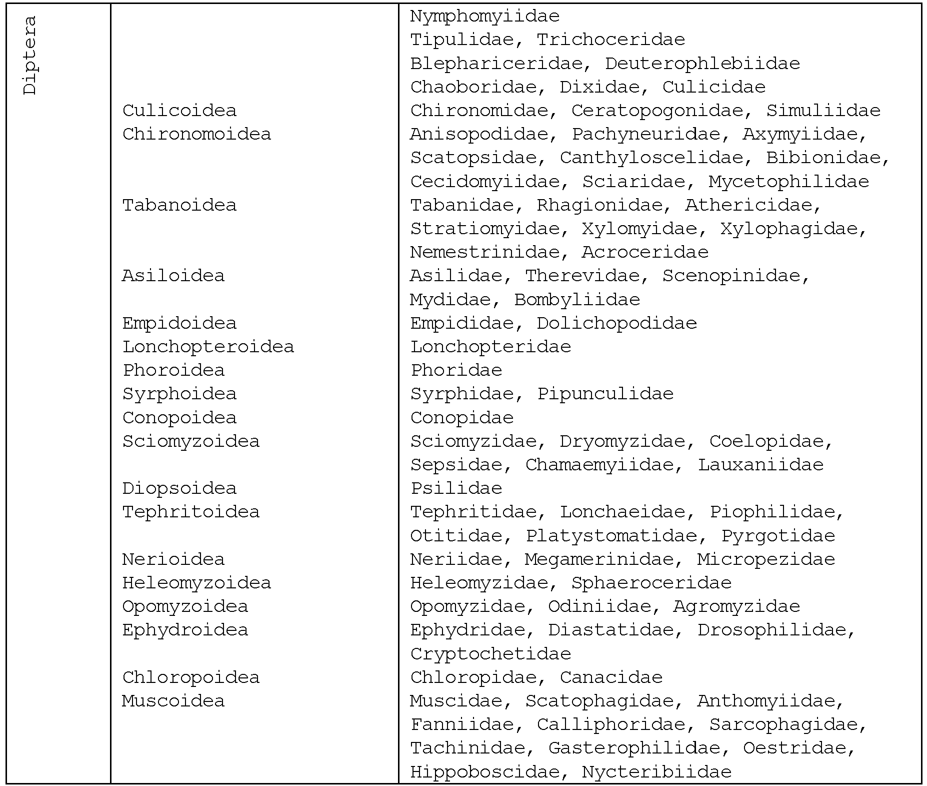

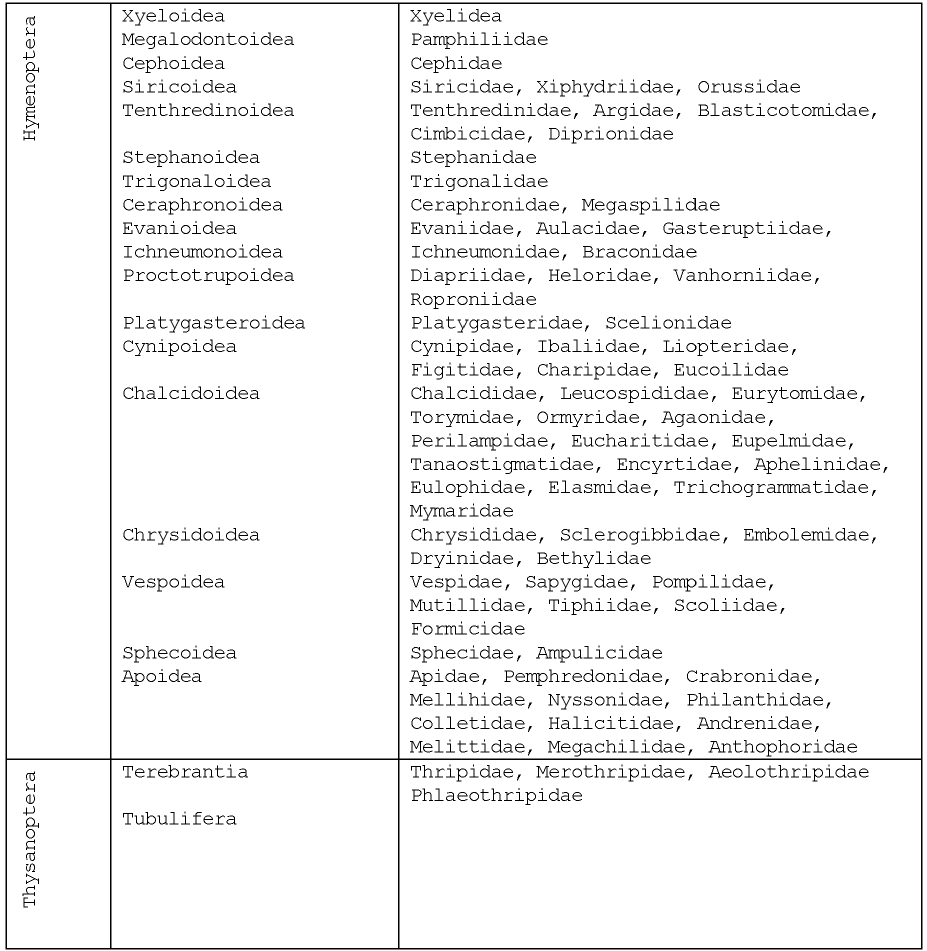

The pathogenic insect is more preferably a hemiptera or a thrips, and particularly preferably at least one member selected from the group consisting of insects in the family *Aleyrodidae* and insects in the family *Thripidae.*

Examples of pathogenic microorganisms include, but are not limited to, blast disease pathogens, sheath blight pathogens, anthracnose pathogens, phytophthora pathogens, powdery mildew pathogens, brown blotch disease pathogens, mold pathogens (e.g., gray mold pathogens), rust pathogens, scab pathogens, bacterial brown stripe pathogens, Bakanae disease pathogens, bacterial seedling blight pathogens, *Burkholderia glumae,* soft rot pathogens, canker disease pathogens, black rot pathogens, rot pathogens, blossom rot pathogens, root-knot disease pathogens, bacterial wilt disease pathogens, root rot wilt pathogens, Fusarium wilt pathogens, *Sclerophthora macrospora,* leaf blotch pathogens, and smut pathogens.

The pathogenic microorganism is preferably at least one member selected from the group consisting of blast disease pathogens, sheath blight pathogens, phytophthora pathogens, and brown blotch disease pathogens.

If the pest controlled by the pest control composition is a pathogenic insect or pathogenic microorganism for a plant, the plant may be the entirety or part of the plant. Some examples of plants include stems, leaves, flowers, ears, fruits, trunks, branches, seeds, roots, shoots, and seedlings.

Examples of plants include gramineous plants (e.g., rice, barley, wheat, maize, and oats), cruciferous plants (e.g., radishes, turnips, chinese cabbage, cabbage, *shirona, mizuna, mibuna, komatsuna,* broccoli, and cauliflower), cucurbitaceous plants (e.g., pumpkins, cucumbers, white gourds, watermelon, wax gourds, and melons), solanaceous plants (e.g., green bell peppers, eggplants, tomatoes, capsicums, potatoes, and *shishito* peppers), Apiaceae plants (e.g., carrots, parsley, Japanese honewort, and celerys), Liliaceae plants (e.g., green onions, onions, green chives, *wakegi* leek, and Allium chinese), Asteracea plants (e.g., chrysanthemum, chrysanthemum greens, burdock, sunflower, lettuce, butterbur, and baby leaves), chenopodiaceous plants (e.g., spinach and chard), convolvulaceous plants (e.g. sweet potatoes), leguminous plants (e.g., endo peas, soybeans, broad beans, edamame peas, string beans, and peanuts), rosaceous plants (e.g., strawberries, peaches, plums, apples, and pears), and vitaceous plants (e.g., grapes).

The plant is preferably at least one member selected from the group consisting of gramineous plants, cruciferous plants, solanaceous plants, and cucurbitaceous plants.

In an embodiment, the pest control composition may be applied directly to a pest, or to a habitat or potential habitat of a pest (or a potential site of pest occurrence). Examples of habitats or potential habitats of pests include places where crops or ornamental plants grow (e.g., plastic greenhouses, orchards, fields, gardens, and planters), and places where crops or ornamental plants are stored (e.g., kitchens and warehouses).

In an embodiment, the pest control composition may be applied to (the entirety or part of) a plant directly or to soil in which a plant is grown.

The method for applying the pest control composition may be any method commonly used in applying a pest control composition, such as coating or spraying. The lower limit of the amount of the pest control composition applied may be, for example, 1 g, 5 g, 10 g, 15 g, 20 g, 25 g, 30 g, 35 g, 40 g, 45 g, 50 g, 100 g, 200 g, 300 g, 400 g, or 500 g per hectare of the applied area. The upper limit of the amount of the pest control composition applied may be, for example, 10000 g, 9000 g, 8000 g, 7000 g, 6000 g, 5000 g, 4000 g, 3000 g, or 2000 g per hectare of the applied area. The amount of the pest control composition may be, for example, 1 to 10000 g, 5 to 9000 g, or 10 to 8000 g per hectare of the applied area.

### Examples

One embodiment of the present disclosure is described in more detail with reference to the Examples below. However, the disclosure is not limited to the Examples.

### Experimental Example

9 parts by mass of a subagent of a formulation (xylene:DMF:Solpol 3005X (Toho Chemical Industry Co., Ltd.) = 4:4:1) was mixed with 1 part by mass of dexmedetomidine (Wako) to prepare a 10% emulsion. A diluted solution of the 10% emulsion with a predetermined concentration was prepared by using a spreading agent, Grameen S (Toyo Green Co., Ltd.), diluted 10000-fold with water. Sample crops were individually sprayed with a sufficient amount of the diluted chemical solution by using a spray gun.

### Test method for Bemisia tabaci (adult) and Frankliniella occidentalis (first-instar larva)

After the sample crops were sprayed with the chemical solution, they were air-dried, and then the leaves were cut and stored in cups. While test insects were released, the number of insects released was counted, and the cups were covered with a lid. The mortality rate was calculated from the number of surviving insects after 2 days for *Bemisia tabaci* and after 5 days for *Frankliniella occidentalis.* Their corrected mortality rate was calculated from the following formula: Corrected mortality rate (%) = [(survival rate of untreated group - survival rate of treated group)/survival rate of untreated group] × 100

### Test method for Nilaparvata lugens (third-instar larva) and Nephotettix cincticeps (third-instar larvae)

After the sample crops were sprayed with the chemical solution, they were air-dried, and 10 test insects were released. To prevent the escape of the test insects, plants were covered with cups and nylon gauze. The mortality rate was calculated from the number of surviving insects after 6 days, and the corrected mortality rate was calculated from the following formula: Corrected mortality rate (%) = [(survival rate of untreated group - survival rate of treated group)/ survival rate of untreated group] × 100

### Test method for blast disease pathogen

Seedlings at the 2.5-leaf stage were sprayed with the chemical solution, and placed in a humid room for 8 days with blast disease pathogens, followed by measuring the area of lesions. The preventive value was calculated from the ratio to the untreated group according to the following formula (N): Preventive value = 100 - (damage in treated group/damage in untreated group) × 100 (N)

### Test method for sheath blight pathogen

Rice plants at the 5-leaf stage were sprayed with the chemical solution, and sheath blight fungi (bran) were scattered near the ground. After the plants were left in a humid room for 6 days, the increase in lesions was measured. The preventive value was calculated according to formula (N).

### Test method for phytophthora pathogen

Tomatoes at the 4-leaf stage were sprayed with the chemical solution, inoculated with a spray of a zoospore suspension of phytophthora disease pathogens, and then placed in a humid room overnight. After 5 days, the area of lesions on leaves was measured, and the preventive value was calculated according to formula (N).

### Test method for brown blotch disease pathogen

Cucumbers at the 2-leaf stage were sprayed with the chemical solution and inoculated with a spray of a spore suspension of brown blotch disease pathogens, and then placed in a humid room for 8 days. The area of lesions on leaves was measured, and the preventive value was calculated according to formula (N).

Tables 2 and 3 show the test results. Although chemical damage was also examined together in the test method for each pathogen, no chemical damage was observed in any of the cases.

**Table 2**

| Sample Crop | Cabbage | | Rice Plant | |
|---|---|---|---|---|
| Test Insect | *Bemisia tabaci* (Adult Insect) | *Frankliniella occidentalis* (First-instar Larva) | *Nilaparvata lugens* (Three-instar Larva) | *Nephotettix cincticeps* (Three-instar Larva) |
| | Insect Mortality Rate (Corrected) | Insect Mortality Rate (Corrected) | Insect Mortality Rate (Corrected) | Insect Mortality Rate (Corrected) |
| Chemical Agent 100 ppm | 100 (100) | 100 (100) | 100 (100) | 100 (100) |
| Chemical Agent 500 ppm | 100 (100) | 100 (100) | 100 (100) | 100 (100) |
| Solvent | 10 (0) | 10 (0) | 0 (0) | 50 (17) |
| Untreated Group | 10 (0) | 10 (0) | 20 (0) | 40 (0) |

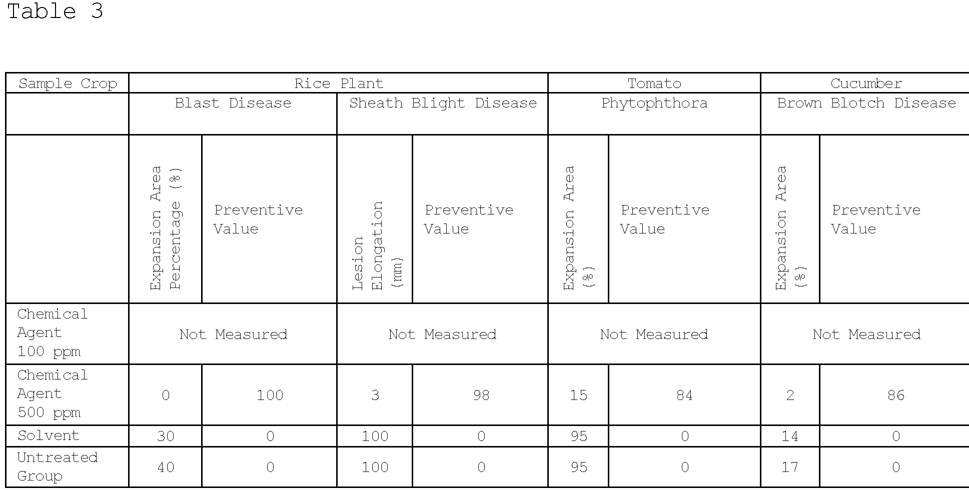

## Claims

1. A pest control composition comprising a compound represented by the following formula (1) or a salt thereof: 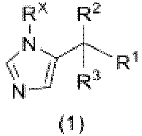 wherein
R¹ represents an aryl group optionally having one or more substituents,
R² represents a hydrogen atom, a halogen atom, a cyano group, a hydrocarbon group optionally having one or more substituents, R⁴O-, R⁵S-, or R⁶R⁷N-,
R³ represents a hydrogen atom or a hydrocarbon group optionally having one or more substituents,
R^{X} represents a hydrogen atom, a hydrocarbon group optionally having one or more substituents, R⁸CO-, or R⁹SO₂-,
R⁴, R⁵, R⁶, R⁷, R⁸, and R⁹ each independently represent a hydrogen atom or a hydrocarbon group optionally having one or more substituents, and
R³ may be bound to R¹ or R² to form a ring.

2. The pest control composition according to claim 1, wherein R¹ is a phenyl group optionally having one or more substituents.

3. The pest control composition according to claim 1 or 2, wherein R¹ is a phenyl group having at least one substituent selected from the group consisting of halogen atoms and alkyl groups.

4. The pest control composition according to any one of claims 1 to 3,
wherein
R² is a hydrogen atom, a halogen atom, a cyano group, an alkyl group optionally having one or more substituents, an alkenyl group optionally having one or more substituents, an alkynyl group optionally having one or more substituents, an aryl group optionally having one or more substituents, R⁴O-, R⁵S-, or R⁶R⁷N-, and
R⁴, R⁵, R⁶, and R⁷ are each independently a hydrogen atom or an alkyl group optionally having one or more substituents.

5. The pest control composition according to any one of claims 1 to 4, wherein R² is an alkyl group optionally having one or more substituents.

6. The pest control composition according to any one of claims 1 to 5, wherein R³ is a hydrogen atom, an alkyl group optionally having one or more substituents, or an aryl group optionally having one or more substituents.

7. The pest control composition according to any one of claims 1 to 6, wherein R³ is a hydrogen atom.

8. The pest control composition according to any one of claims 1 to 7,
wherein
R^{X} is a hydrogen atom, an alkyl group optionally having one or more substituents, an aryl group optionally having one or more substituents, an aralkyl group optionally having one or more substituents, R⁸CO-, or R⁹SO₂-, and
R⁸ and R⁹ are each independently a hydrogen atom or an alkyl group optionally having one or more substituents.

9. The pest control composition according to any one of claims 1 to 8, wherein R^{X} is a hydrogen atom.

10. The pest control composition according to any one of claims 1 to 9, wherein the pest is a pathogenic insect or pathogenic microorganism for a plant.

11. The pest control composition according to claim 10, wherein the plant is at least one member selected from the group consisting of gramineous plants, cruciferous plants, solanaceous plants, and cucurbitaceous plants.

12. The pest control composition according to any one of claims 1 to 11, wherein the pest is at least one member selected from the group consisting of hemipterans, thrips, blast disease pathogens, sheath blight pathogens, phytophthora pathogens, and brown blotch disease pathogens.

13. The pest control composition according to any one of claims 1 to 12, for being applied to a plant directly or to soil in which a plant is grown.
